# EUROPÄISCHE PATENTSCHRIFT

(11) **EP 0 857 592 B1**
(45) Veröffentlichungstag und Bekanntmachung des Hinweises auf die Patenterteilung: **09.04.2003**
(21) Anmeldenummer: 98100440.1
(22) Anmeldetag: 13.01.1998
(51) Int. Cl.: B60H 1/00

(54) **Luftkanal eines Omnibusses**
Air duct for a bus
Conduit d'air pour un autobus

(30) Priorität: 07.02.1997 DE 19704676
(43) Veröffentlichungstag der Anmeldung: 12.08.1998
(73) Patentinhaber: MAN Nutzfahrzeuge Aktiengesellschaft, 80976 München (DE)
(72) Erfinder: Sager, Johann, 85235 Odelzhausen (DE); Krimmling, Harald, Dipl.-Ing., 85250 Altomünster (DE)

(56) Entgegenhaltungen:
- EP-A- 0 529 263
- EP-A- 0 545 035
- EP-A- 0 678 408
- US-A- 4 247 586

## Beschreibung

Die Erfindung betrifft einen Luftkanal in einem Omnibus, gemäß dem Oberbegriff der Ansprüche 1 und 2.

Aus der EP 0 545 035 B1 ist ein Luftkanal eines Omnibusses mit an Luftkanalträgern befestigbaren Lüfterelementen bekannt. Hierbei ist der Düsenkörper des Lüfterelementes in einem Ausschnitt des aus Kunststoffschaum bestehenden Luftkanalträgers versenkt angeordnet und liegt mit seinem Flansch außen auf dem Luftkanalträger auf. Des weiteren sind in etwa U-förmige, sich einander gegenüberliegend angeordnete Halterungen vorgesehen, deren äußere Schenkel an ihren freien Enden gekrümmt sind und deren innere Schenkel im ungespannten Zustand in etwa tangential an der Außenwand des Düsenkörpers anliegen, wobei die einander gegenüberliegenden Halterungen über ein elastisches Band gehalten sind und unter Andruck an den Düsenkörper miteinander verspannt werden. Die Bodenteile der Halterungen sind mit Gewinden versehen, die über flanschseitig der Düsenkörper einsteckbare Schrauben einschraubend erreichbar sind. Durch weiteres Anziehen der Schrauben sind die Halterungen unter Anlage ihrer Krümmungen gegen innenseitig des Luftkanalträgers komplementär ausgebildete Nasen verspannbar. Für die Montage der Lüfterelemente sind im Luftkanalträger Ausschnitte in Abhängigkeit von gewünschter Anordnung und Anzahl durch Ausschneiden des Materials vorzusehen. Das Lüfterelement wird dann in diese Ausschnitte eingeschoben und über die in den Flanschen der Düsenkörper angeordneten, die Gewinde der Halterungen erreichenden Schrauben gegen den Luftkanal festgezogen. Die Befestigung dieser bekannten Lüfterelemente an dem Luftkanalträger verlangt jedoch einen vergleichsweise hohen Arbeitsaufwand. Des weiteren ist diese Ausführung nicht zweikanalig darstellbar. Um eine Zweikanaligkeit dieses bekannten Luftkanals zu erzielen, müßte in aufwendiger Weise ein trennender Deckel in den Luftkanalträger eingeklebt werden.

Es sind weiterhin an den Luftkanalträgern von Omnibussen befestigbare Lüfterelemente bekannt, die je nach Sitzteiler variabel anordbar, an den Luftkanälträgern festrastbar sind. Um die nötige Stabilität des Luftkanals und dieser Befestigung zu erzielen, sind die Luftkanalträger häufig aus Metallwerkstoffen gefertigt. Diese Luftkanalträger weisen ein hohes Gewichtsaufkommen auf und stellen im Kollisionsfall des Omnibusses eine zusätzliche Gefahrenquelle für die Insassen dar.

Ein Luftkanal, bei dem die Merkmale der Oberbegriffe der Ansprüche 1 und 2 bekannt sind, ist zum Beispiel in der EP 0 678 408 offenbart.

Der Erfindung liegt die Aufgabe zugrunde, die Anbindung von Lüfterelementen und/oder Verblendelementen an einem Luftkanalträger eines Omnibusses fertigungs- und montagetechnisch zu optimieren und die Insassensicherheit zu erhöhen.

Diese Aufgabe wird erfindungsgemäß durch die kennzeichnenden Merkmale des Anspruches 1 und des Anspruches 2 gelöst.

Mit dem erfindungsgemäßen Luftkanal ist eine in Fahrzeuglängsrichtung variable Anordbarkeit und montagegünstige Befestigung eines Lüfterelementes und/oder eines Verblendelementes an einem Luftkanalträger gegeben. Der im Querschnitt etwa U-förmig ausgebildete Luftkanalträger weist zwei in Fahrzeuglängsrichtung gerichtete, zueinander parallele Längsseiten auf, die unterseitig eine Öffnung begrenzen. Diese ist durch Lüfterelemente und/oder Verblendelemente abgedeckt. Die Lüfterelemente können eine Vielzahl von Bauteilen, beispielsweise Düsenkörper, Beleuchtung, Signaltaste und dergleichen in einer gemeinsamen Baueinheit aufweisen. Die Verblendelemente sind bedarfsweise anstelle der Lüfterelemente und die Kombination mit diesen am Luftkanalträger befestigbar.

Gemäß Anspruch 1 sind die Lüfterelemente und die Verblendelemente über längsseitig angeordnete federnde Clipse an dem Luftkanalträger befestigt. Diese Clipse greifen mit einem ersten Teilabschnitt in Hinterschneidungen am Luftkanalträger verrastend ein, wodurch die Lüfterelemente und/oder Verblendelemente am Luftkanalträger verrastend ein, wodurch die Lüfterelemente und/oder Verblendelemente am Luftkanalträger gehalten und fixiert sind. Zusätzlich greifen die Clipse mit einem zweiten Teilabschnitt in Nuten oder Einbuchtungen des Luftkanalträgers zur Querversteifung desselben über die Lüfter- und Verblendelemente ein. Durch den zweiten Teilabschnitt des Clipses ist durch dessen weitgehendem Formschluß mit einer hierzu etwa komplementär ausgebildeten Nut oder Einbuchtung ein Auseinanderdrücken des Luftkanaltägers in Horizontalrichtung verhindert. Damit ist der gesamte Luftkanal in seiner Parallelität stabilisiert. Die Clipse können das durch die Hinterschneidung einerseits und durch die Nut oder die Einbuchtung andererseits gebildete, endseitig der Längsseiten des Luftkanalträgers angeordnete Profile unter Spannung umgreifen. Durch den Gegenzug von erstem und zweitem Teilabschnitt ist eine feste Anbindung des Lüfterelementes und/oder des Verblendelementes am Luftkanalträger gegeben und somit ein gerader und extakter Luftkanal gewährleistet. Die Anbindung der Clipse an die Lüfterelemente und/oder an die Verblendelemente kann durch Nieten, Schrauben oder dergleichen realisiert sein. Die Hinterschneidungen können innenseitig oder außenseitig der Längsseiten des Luftkanalträgers angeordnet sein. Bei außenseitigem Vorsehen der Hinterschneidungen an den Längsseiten können in vorteilhafter Weise bei der Fertigung des Luftkanalträgers aufwendige und werkzeugintensive Hinterschneidungen entfallen, wodurch weitere Kosten eingespart werden können. Die Stärke der Anspannkraft der Lüfterelemente undloder der Verblendelemente am Luftkanalträger kann durch die Werkstoffauswahl, der Dimensionierung und der Anzahl der Clipse sowie dem Schrägungsgrad der Hinterschneidung am Luftkanalträger entsprechend erzielt werden.

Gemäß Anspruch 2 sind die die Öffnung des Luftkanalträgers abdeckenden Lüfterelemente und/oder Verblendelemente über an ihren oberen Längsaußenbereichen angeordnete erste Klettverschlußbänder und über mit diesen korrespondierenden, entsprechend als Gegenstücke hierzu ausgebildete, an einer Unterseite des Luftkanalträgers angeordnete zweite Klettverschlußbänder an der Unterseite des Luftkanalträgers befestigt. Damit ist eine lösbare Verbindung von Luftkanalträger und Lüfterelementen und/oder Verblendelementen gegeben, wobei die Querversteifung des Luftkanalträgers und die Stabilisierung des Luftkanals in seiner Parallelität bereits durch die Klettverschlußbänder mit übernommen ist. Die Klettverschlußbänder können beispielsweise durch Kleben oder dergleichen an dem Luftkanalträger, dem Lüfterelement und/oder dem Verblendelement befestigt sein. Ist ein Luftkanalträger aus Kunststoffschaum vorgesehen, können die zweiten Klettverschlußbänder in einfacher Weise an der Unterseite des Luftkanalträgers eingeschäumt sein. Hierdurch ist eine besonders einfache und kostengünstige Lösung gegeben.

Gemäß einer weiteren Ausgestaltung der Erfindung können die ersten Teilabschnitte und/oder die zweiten Teilabschnitte der Clipse als separates Bauteil ausgebildet oder ein Bestandteil des Lüfterelementes und/oder der Verblendelemente sein. Als separates Bauteil ausgeführt, können die Clipse durch Kleben, Schrauben, Nieten oder dergleichen an den Lüfterelementen und/oder den Verblendelementen angebracht sein. Erster Teilabschnitt oder zweiter Teilabschnitt der Clipse können Bestandteil des Lüfterelementes und/oder des Verblendelementes sein. Dies kann durch Anspritzen an das jeweilige Bauteil realisiert sein, wodurch weitere Montage- und Materialkosten einsparbar sind.

Gemäß einer weiteren Ausgestaltung der Erfindung können die für das Eingreifen der Clipse vorgesehenen Hinterschneidungen am Luftkanalträger innenseitig desselben und die für den unter Gegenzug eingreifenden, zweiten Teilabschnitt vorgesehenen Nuten oder Einbuchtungen außenseitig der Längsseiten des Luftkanalträgers an diesen gebildet sein. Es ist auch möglich, diese Hinterschneidungen außenseitig an den Längsseiten des Luftkanalträgers anzuordnen und die Nuten oder Einbuchtungen innenseitig der Längsseiten des Luftkanalträgers auszubilden. Letztere Ausführung hat den Vorteil, daß bei Fertigung des Luftkanalträgers aufwendige und werkzeugintensive Hinterschneidungen entfallen können, wodurch weitere Kosten einsparbar sind.

Gemäß einer weiteren Ausgestaltung der Erfindung können bei der durch Klettverschlußbänder realisierten Anbindung des Lüfterelementes und/oder des Verblendelementes an dem Luftkanalträger zusätzliche, von den Lüfterelementen und/oder den Verblendelementen abragend angeordnete und sich an einer Vertikalflanke der Längsseiten des Luftkanalträgers abstützende Stege zur Querversteifung des Luftkanalträgers vorgesehen sein. Die an den Längsseiten des Luftkanalträgers gebildeten Vertikalflanken können außenseitig der Längsseiten oder in Nuten derselben vorgesehen sein. Die sich an den Vertikalflanken des Luftkanalträgers abstützenden Stege können separate Bauteile sein, die an den Lüfterelementen und/oder den Verblendelementen befestigbar sind. Die Stege können auch Bestandteil der Lüfterelemente und/oder der Verblendelemente sein.

Gemäß einer weiteren Ausgestaltung der Erfindung können unabhängig von der Befestigungsart der Lüfterelemente und/oder der Verblendelemente an dem Luftkanalträger im Kontaktbereich zwischen Unterseite des Luftkanalträgers und dem oberen Längsaußenbereich der Lüfterelemente und/oder der Verblendelemente in Längsrichtung verlaufende Dichtstreifen angeordnet sein. Hierdurch kann die Temperaturisolierung und die Körperschallisolierung des erfindungsgemäßen Luftkanals weiter verbessert sein.

Gemäß einer weiteren Ausgestaltung der Erfindung kann der Luftkanalträger einteilig ausgebildet sein. Des weiteren kann der Luftkanalträger aus einem Kunststoff gefertigt sein. Durch Verwendung eines aus einem gewichtssparenden Kunststoff gefertigten Luftkanalträgers ist eine hinsichtlich Insassensicherheit und Fertigungsaufwand optimierte Ausgestaltung eines Luftkanals gegeben. Bei Vorsehen beispielsweise eines relativ weichen Kunststoffschaumes als Kunststoff, z. B. PU-Werkstoff, kann dieser aufgrund seiner Nachgiebigkeit und seines geringen Gewichtes, im Gegensatz zu Luftkanalträgern aus Metallwerkstoff, die Verletzungsgefahr der Insassen erheblich mindern. Zudem weist ein aus Kunststoffschaum bestehender Luftkanalträger eine erheblich bessere Temperaturisolation auf, so daß auf das Vorsehen zusätzlicher Abdichtungen verzichtet werden kann. Des weiteren kann das bislang zur Plazierung des Lüfterelementes und/oder des Verblendelementes notwendige Ausschneiden des Luftkanalträgers an gewünschter Stelle ersatzlos entfallen, da der aus Kunststoffschaum gefertigte Luftkanalträger bereits seine Endkontur besitzt. Die Plazierung des Lüfterelementes und/oder des Verblendelementes kann darüber hinaus durch die wiederlösbare Festrastung jederzeit korrigiert und an die aktuelle Sitzanordnung angepaßt werden. Als Ausgangswerkstoff für die Fertigung des Luftkanalträgers kann beispielsweise ein Polypropylen-Strangprofil vorgesehen sein. Durch das Vorsehen eines einteiligen Luftkanalträgers können weitere Montagearbeiten eingespart werden.

Gemäß einer weiterführenden Ausgestaltung der Erfindung kann der Luftkanalträger innenseitig in seinem oberen Bereich zu einer etwa horizontal verlaufenden Trennwand ausgebildet sein. Durch die gegebene Einstückigkeit von Luftkanalträger und Trennwand sind weitere aufwendige Montagearbeiten einsparbar. Der durch die gegebene Trennwand zweiflutig ausgeführte Luftkanalträger kann bei seiner Fertigung ohne große Umrüstarbeiten am Werkzeug kostengünstig gefertigt werden. Die einstückig mit dem Luftkanalträger gebildete, etwa horizontale Trennwand teilt den Luftkanal in einen oberen Bereich, den Zwangsbelüftungskanal, und einen unteren Bereich, den Düsenbelüftungskanal. Der Zwangsbelüftungskanal ist zur Aufnahme einer Gebläseeinheit an beliebiger Stelle für die Verlegung von Kabelbäumen oder dergleichen ausgebildet. Der Zwangsbelüftungskanal kann zur separaten Zwangsbelüftung des Omnibusraumes vorgesehen sein. Hier herrschen geringe Druckverhältnisse und ein hoher Luftdurchsatz. Unterhalb der Trennwand kann der Luftkanalbereich für die Düsenbelüftung vorgesehen sein. In diesem Bereich herrschen höhere Druckverhältnisse und ein geringerer Luftdurchsatz. Durch Entfall der horizontalen Trennwand oder durch Ausschneiden derselben ergibt sich bei Bedarf wieder ein einflutiger Luftkanal.

Gemäß einer weiteren Ausgestaltung der Erfindung können die Lüfterelemente und/oder die Verblendelemente an einer Längsseite des Luftkanalträgers mittels Clipse und an anderer Längsseite des Luftkanalträgers mittels Klettverschlußbänder befestigt sein.

Nachstehend ist die erfindungsgemäße Lösung anhand von in der Zeichnung dargestellter Ausführungsbeispiele näher erläutert.

In der Zeichnung zeigen:
- Fig. 1: schematisch einen einflutigen Luftkanal mit einem an einem Luftkanalträger angeordneten Lüfterelement,
- Fig. 2: einen vergrößerten Ausschnitt einer Befestigung eines Lüfterelementes an einem Luftkanalträger gemäß Fig. 1,
- Fig. 3: schematisch einen einflutigen Luftkanal mit einem an einem Luftkanalträger angeordneten Verblendelement gemäß Fig. 1,
- Fig. 4: schematisch einen zweiflutigen Luftkanal mit einem intern angeordneten Gebläseeinsatz und einem am Luftkanalträger befestigten Lüfterelement,
- Fig. 5: schematisch eine alternative Befestigung eines Lüfterelementes an einem Luftkanalträger und
- Fig. 6: schematisch eine alternative Befestigung eines Verblendelementes an einem Luftkanalträger.

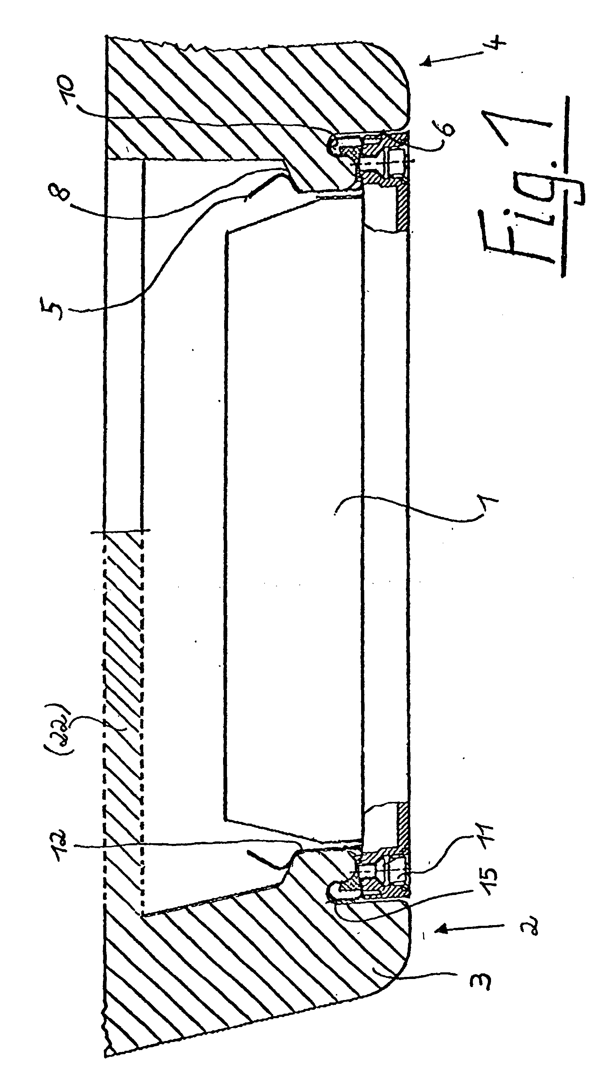

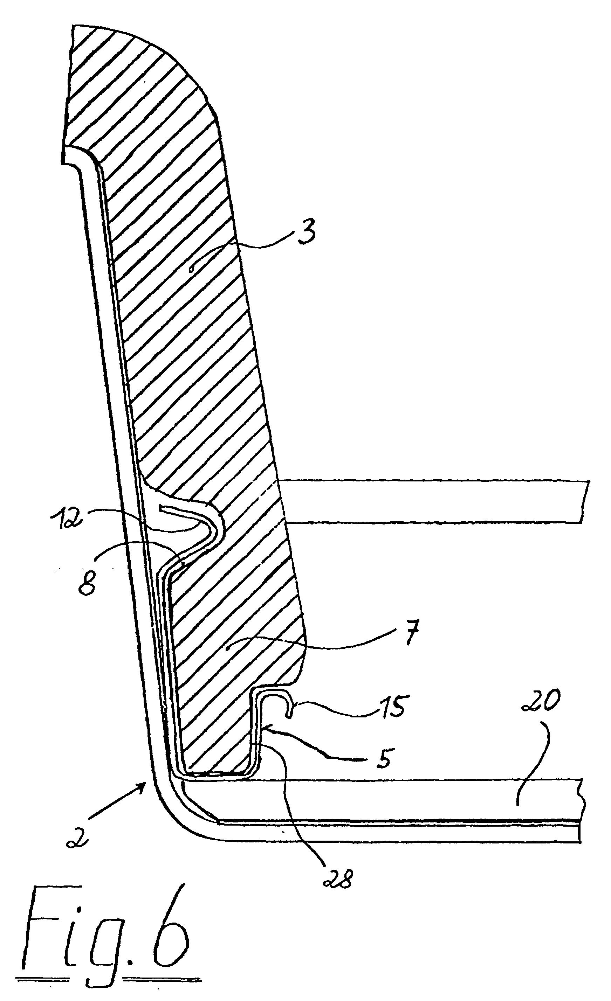

In Fig. 1 ist die Befestigung eines Lüfterelementes 1 an einem Luftkanalträger 3 eines einflutig ausgebildeten Luftkanals (1, 3,) eines Omnibusses dargestellt. Der in seinem Querschnitt etwa U-förmige Luftkanalträger 3 weist zwei zueinander parallele Längsseiten 2, 4 auf, die unterseitig eine Öffnung 6 begrenzen. Diese ist in dem hier gezeigten Beispiel durch ein Lüfterelement 1 abgedeckt. Das Lüfterelement 1 ist mittels längsseitig des Luftkanalträgers 3 angeordnete, federnde Clipse 5 an dem Luftkanalträger 3 befestigt. Dabei greifen die Clipse 5 mit einem ersten Teilabschnitt 12 in am Luftkanalträger 3 vorgesehenen Hinterschneidungen 8 verrastend ein. Des weiteren greifen die mit dem Lüfterelement 1 verbundenen Clipse 5 mit einem zweiten Teilabschnitt 15 in unterseitig der parallelen Längsseiten 2, 4 des Luftkanalträgers 3 angeordnete Nuten 10 zur horizontalen Querversteifung des Luftkanalträgers 3 ein. In der hier gezeigten Version ist der Clips 5 einteilig ausgebildet und über eine Schraube 11 mit dem Lüfterelement 1 verbunden. Anstelle einer Schraube 11 können auch andere geeignete Befestigungsmittel, wie beispielsweise Nieten oder eine Klebung vorgesehen sein. Der Clips 5 umklammert in seinem eingerasteten Zustand ein nahezu komplementär hierzu gestaltetes Profil, das innenseitig des Luftkanalträgers 3 einstückig mit diesem durch die Hinterschneidung 8 und die Nut 10 gebildet ist. Die innenseitig der Längsseiten 2, 4 des Luftkanalträgers 3 gebildete Hinterschneidung 8 kann bedarfsweise auch außenseitig der Längsseiten 2, 4 des Luftkanalträgers 3 gebildet sein. Dementsprechend ist die Nut 10 innenseitig der Längsseiten 2, 4 des Luftkanalträgers 3 angeordnet. In Fig. 6 ist eine solche Nut 10 durch eine innenseitig des Luftkanalträgers 3 angeordnete Einbuchtung 28 gegeben. Unabhängig von der Anordnung der Hinterschneidungen 8 und der Nuten 10 bzw. der Einbuchtungen 28 bildet der erste Teilabschnitt 12 und der zweite Teilabschnitt 15 des Clipses 5 einen Gegenzug, so daß die Clipse 5 das Lüfterelement 1 mit entsprechender Anspannkraft am Luftkanalträger 3 festrasten. Die Anspannkraft der Clipse 5 kann durch Anzahl, Breite, Dimensionierung und Werkstoffauswahl der Clipse 5 oder dem Schrägungsgrad der Hinterschneidungen 8 entsprechend gesteuert werden. In der gezeigten Version sind die Clipse 5 einteilige, separat ausgebildete Bauteile. In einer hier nicht gezeigten Version können die Clipse ganz oder teilweise Bestandteil des Lüfterelementes 1 sein und an diesem beispielsweise angespritzt sein.

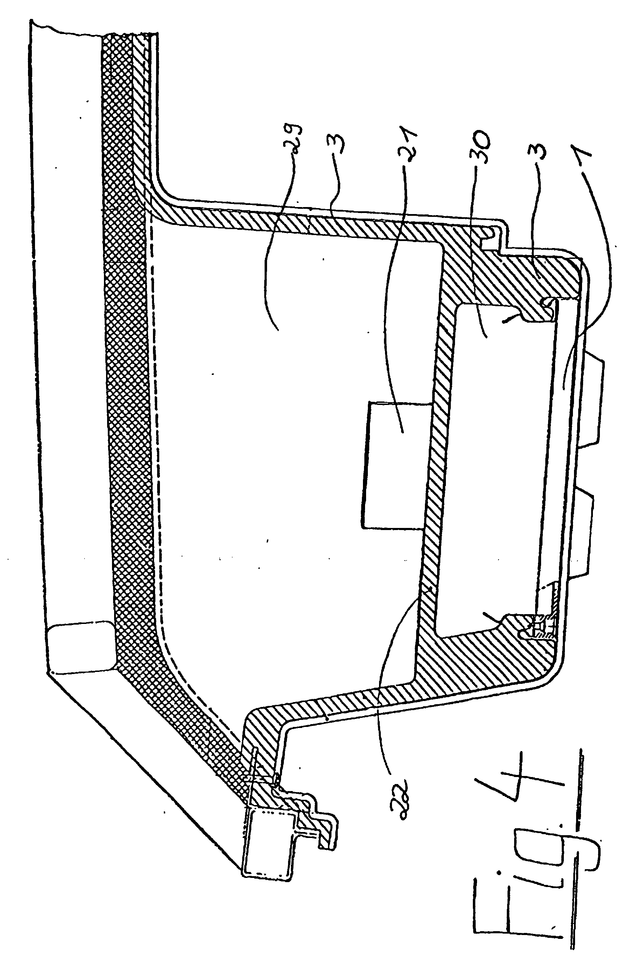

Erklärenderweise ist zusätzlich im linken oberen Abschnitt des einflutig ausgebildeten Luftkanalträgers 3 strichliert und schraffiert eine in seinem oberen Bereich des Luftkanalträgers 3 angeordnete Trennwand 22 dargestellt. Durch diese ist der Luftkanal 1, 3 zweiflutig ausgeführt (Fig. 4).

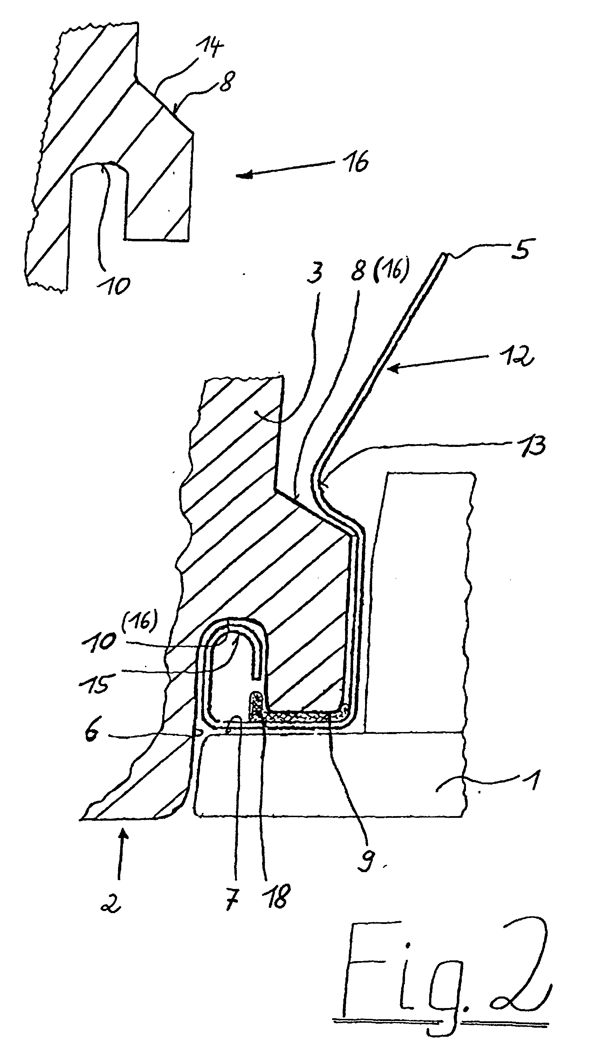

Fig. 2 zeigt als vergrößerten Ausschnitt aus Fig. 1 den Clips 5 in seinem aufgerasteten Zustand innenseitig der Längsseite 2 des Luftkanalträgers 3. Der Clips 5 weist ein Profil auf, das nahezu komplementär zu einer aus Hinterschneidung 8 und Nut 10 gemeinsam geformten Kontur 16 ausgebildet ist. Dieses Profil des Clipses 5 umgreift die Kontur 16 des Luftkanalträgers 3 unter Spannung. Der Clips 5 stützt sich über einen Knieabschnitt 13 des ersten Teilabschnittes 12 an einer Schräge 14 der Hinterschneidung 8 ab. Je nach Neigungsgrad dieser Schräge 14 kann die Anpresskraft des Clipses 5 am Luftkanalträger 3 variiert werden. Durch das Eingreifen des ersten Teilabschnittes 12 in die Hinterschneidung 8 ist die Festrastung des Lüfterelementes 1 am Luftkanalträger 3 gegeben. Durch den zweiten Teilabschnitt 15 des Clipses 5 ist die horizontale Versteifung des Luftkanalträgers 3 und damit die Stabilisierung der Parallelität des Luftkanals 1, 3 gewährleistet. Des weiteren ist im Kontaktbereich zwischen der Unterseite 9 des Luftkanalträgers 3 und dem oberen Längsaußenbereich 7 des Lüfterelementes 1 ein in Längsrichtung verlaufender Dichtstreifen 18 angeordnet. Dieser kann aus einem weichen, nachgiebigen Kunststoff bestehen und sowohl für eine Temperaturisolierung als auch für eine Körperschallisolierung des Luftkanals 1, 3 vorgesehen sein. Der hier gezeigte Dichtstreifen 18 befindet sich zwischen Clips 5 und der Unterseite 9 des Luftkanalträgers 3. Der Dichtstreifen 18 kann auch an anderer, hierfür geeigneter Stelle angeordnet sein. In einer hier nicht gezeigten Version kann der Dichtstreifen im Kontaktbereich von Luftkanalträger und Verblendelement angeordnet sein.

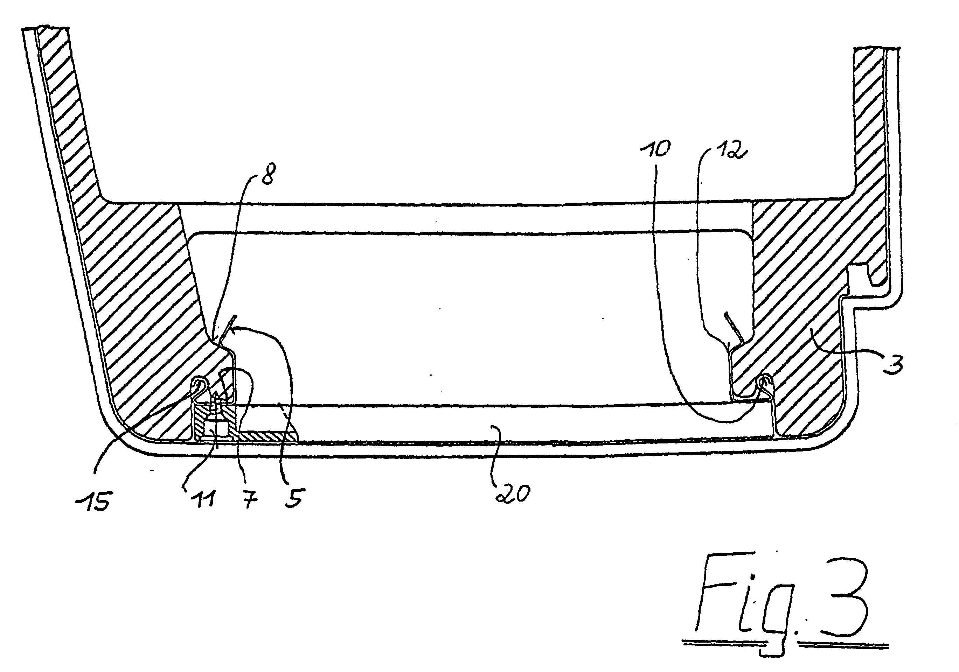

In Fig. 3 ist ein einflutiger Luftkanal 3, 20 mit einem an einem Luftkanalträger 3 angeordneten Verblendelement 20 gezeigt. Dieses ist in Kombination mit hier gezeigten Lüfterelementen 1 je nach Bedarf in Abhängigkeit von der Anordnung der Fahrgastsitze in Fahrzeuglängsrichtung variabel anordbar. Das Verblendelement 20 ist wie das Lüfterelement 1 mittels Clipse 5 in am Luftkanalträger 3 vorgesehenen Hinterschneidungen 8 und Nuten 10 eingreifend verrastbar.

In Fig. 4 ist ein zweiflutig ausgebildeter Luftkanal 1, 3 mit einem daran befestigten Lüfterelement 1 dargestellt. Der zweiflutig ausgebildete Luftkanal 1, 3 weist in seinem oberen Abschnitt eine innenseitig angeordnete und einteilig mit dem Luftkanalträger 3 gebildete Trennwand 22 auf. Diese teilt den Luftkanal 1, 3 in einen oberen Zwangsbelüftungskanal 29 und einen unteren Düsenbelüftungskanal 30. Im oberen Zwangsbelüftungskanal 29 ist ein Gebläseeinsatz 21 angeordnet. Dessen Anordnung ist beliebig wählbar. Des weiteren können im oberen Zwangsbelüftungskanal auch andere Bauteile, wie beispielsweise Kabelbäume und dergleichen angeordnet sein. Im oberen Zwangsbelüftungskanal 29 herrschen geringe Druckverhältnisse und ein hoher Luftdurchsatz. Im unteren Düsenbelüftungskanal 30 herrschen höhere Druckverhältnisse und ein geringerer Luftdurchsatz.

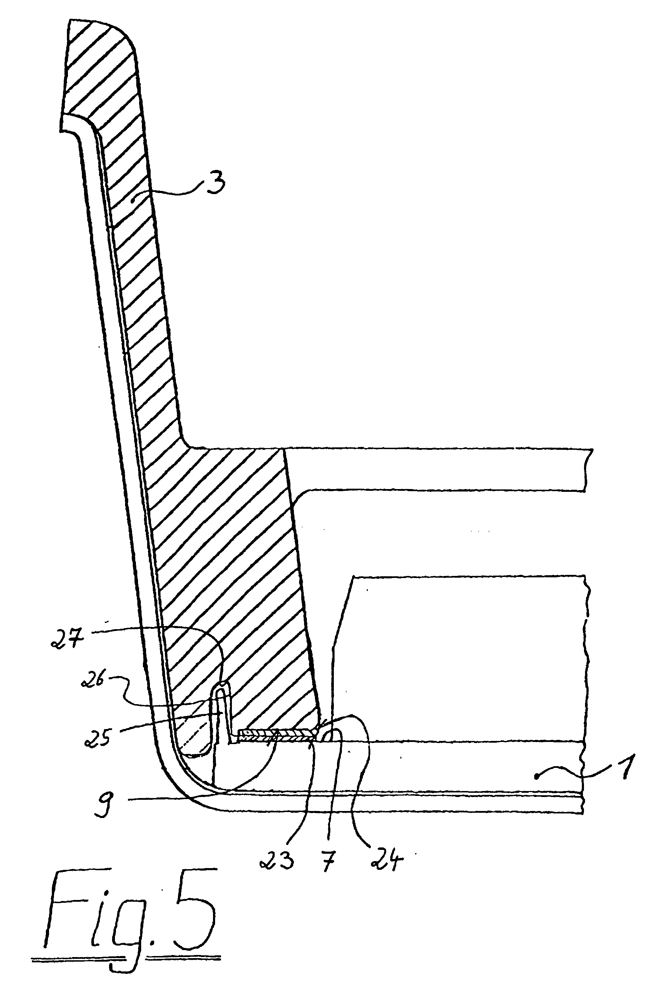

Fig. 5 zeigt eine alternative Befestigung einer Lüfterkombination 1 an einem Luftkanalträger 3. Das Lüfterelement 1 ist über an seinen oberen Längsaußenbereichen 7 angeordnete erste Klettverschlußbänder 23 und über mit diesen korrespondierenden, entsprechend als Gegenstücke hierzu ausgebildete, an einer Unterseite 9 des Luftkanalträgers 3 angeordnete, zweite Klettverschlußbänder 24 an der Unterseite 9 des Luftkanalträgers 3 befestigt. In dem hier gezeigten Beispiel sind die an den oberen Längsaußenbereichen 7 des Luftkanalträgers 3 angeordneten ersten Klettverschlußbänder 23 und die an der Unterseite 9 des Luftkanalträgers 3 angeordneten zweiten Klettverschlußbänder 24 an den jeweiligen Bauteilen durch Klebung befestigt. Gemäß einer hier nicht gezeigten Version können bei Vorsehen eines Lufkanalträgers 3 aus Kunststoffschaum die ersten Klettverschlußbänder 23 in den oberen Längsaußenbereichen 7 des Luftkanalträgers 3 eingeschäumt sein. Die durch erste und zweite Klettverschlußbänder 23, 24 realisierte, lösbare Festrastung von Lüfterkombination 1 und Luftkanalträger 3 ist zudem eine Querversteifung des Luftkanals 1, 3 gegeben. Bedarfsweise kann die Querversteifung des Luftkanals 1, 3 durch zusätzliche, an dem Lüfterelement 1 abragende Stege 25 gegeben sein, die sich an den Längsseiten 2, 4 des Luftkanalträgers 3 gegebenen Vertikalflanken 26 abstützen. Die Vertikalflanken 26 können außenseitig der Längsseiten 2, 4 des Luftkanalträgers 3 oder in diesen angeordneten Nuten 27 gegeben sein. In der hier gezeigten Version ist der Steg 25 Bestandteil des Lüfterelementes 1. Gemäß einer anderen Version kann der Steg 25 auch über Befestigungsmittel an dem Lüfterelement 1 und/oder dem Verblendelement 20 befestigt sein.

Fig. 6 zeigt eine alternative Befestigung eines Blindbauteiles 20 an einem Luftkanalträger 3. Der zur festrastenden Befestigung vorgesehene Clips 5 ist einteilig ausgebildet und mit dem Blindbauteil 20 verbunden. Der Clips 5 entspricht in Ausführung und Wirkungsweise prinzipiell etwa dem in Fig. 2 gezeigten. Die zur Festrastung des Clipses 5 am Luftkanalträger 3 vorgesehene Hinterschneidung 8 ist hier außenseitig der Längsseite 2 des Luftkanalträgers 3 angeordnet. Die für den Gegenzug erforderliche Nut für den hierin eingreifenden Clips 5 ist durch eine innenseitig des Luftkanalträgers 3 angeordnete Einbuchtung 28 gegeben. Bei dieser Version kann bei der Herstellung des Luftkanalträgers 3 durch das Verlagern der Hinterschneidung 8 zur Außenseite des Luftkanalträgers 3 hin die Werkzeuggestaltung erheblich vereinfacht werden, wodurch Fertigungskosten einsparbar sind.

Gemäß einer hier nicht gezeigten Version können die Lüfterelemente 1 und/oder die Verblendelemente 20 einerseits an einer Längsseite 2 des Luftkanalträgers 3 mittels Clipse 5 und andererseits an der anderen Längsseite 4 des Luftkanalträgers 3 mittels Klettverschlußbänder 23, 24 befestigt sein. Bei der Befestigung des Lüfterelementes 1 und/oder des Verblendelementes 20 mittels Klettverschlußbänder 23, 24 können ebenfalls zusätzliche Dichtstreifen entsprechend Fig. 2 zwischen Luftkanalträger 3 und dem Lüfterelement 1 und/oder dem Verblendelement 20 angeordnet sein.

Gemäß einer weiteren hier nicht gezeigten Version kann der Luftkanalträger einteilig ausgebildet sein. Des weiteren kann der Luftkanalträger aus einem Kunststoff gefertigt sein. Der Luftkanalträger kann beispielsweise aus einem Kunststoffschaum, z. B. PU-Werkstoff oder aus einem Polypropylen-Strangpreßprofil gefertigt sein.

## Patentansprüche

1. Luftkanal in einem Omnibus, mit einem im Querschnitt etwa U-förmigen Luftkanalträger (3), dessen untere, durch parallele Längsseiten (2, 4) begrenzte Öffnung (6) durch Lüfterelemente (1) und/oder Verblendelemente (20) abgedeckt ist, wobei die Lüfterelemente (1) und die Verblendelemente (20) über längsseitig angeordnete federnde Clipse (5) an dem Luftkanalträger (3) befestigt sind, und wobei die Clipse (5) mit einem ersten Teilabschnitt (12) in Hinterschneidungen (8) am Luftkanalträger (3) verrastend eingreifen, **dadurch gekennzeichnet, dass** die Clipse (5) mit einem zweiten Teilabschnitt (15) in Nuten (10) oder Einbuchtungen (28) des Luftkanalträgers (3) zur Querversteifung desselben über die Lüfter- (1) und Verblendelemente (20) eingreifen.

2. Luftkanal in einem Omnibus, mit einem im Querschnitt etwa U-förmigen Luftkanalträger (3), dessen untere, durch parallele Längsseiten (2, 4) begrenzte Öffnung (6) durch Lüfterelemente (1) und/oder Verblendelemente (20) abgedeckt ist, **dadurch gekennzeichnet, dass** die Lüfterelemente (1) und die Verblendelemente (20) über an ihren oberen Längsaußenbereichen (7) angeordnete erste Klettverschlussbänder (23) an mit diesen korrespondierenden, entsprechend als Gegenstücke hierzu ausgebildeten und unterseitig des Luftkanalträgers (3) angeordneten zweiten Klettverschlussbändern (24) an der Unterseite (9) des Luftanalträgers (3) befestigt sind.

3. Luftkanal nach Anspruch 1, **dadurch gekennzeichnet, daß** die miteinander korrespondierenden ersten Teilabschnitte (12) und zweiten Teilabschnitte (15) der Clipse (5) zueinander unter Gegenzug stehen, und daß die ersten Teilabschnitte (12) und/oder zweiten Teilabschnitte (15) als separates Bauteil oder als Bestandteil des Lüfterelementes (1) und/oder der Verblendelemente (20) gebildet sind.

4. Luftkanal nach einem der Ansprüche 1 und 3, **dadurch gekennzeichnet, daß** die Hinterschneidungen (8) innenseitig und die Nuten (10) oder Einbuchtungen (28) außenseitig der Längsseiten (2, 4) an diesen gebildet sind, oder daß die Hinterschneidungen (8) außenseitig und die Nuten (10) oder Einbuchtungen (28) innenseitig der Längsseiten (2, 4) an diesen gebildet sind.

5. Luftkanal nach Anspruch 2, **dadurch gekennzeichnet, daß** zusätzliche, von den Lüfterelementen (1) und/oder den Verblendelementen (20) abragend angeordnete und sich an Vertikalflanken (26) der Längsseiten (2, 4) des Luftkanalträgers (3) abstützenden Stege (25) zur Querversteifung des Luftkanalträgers (3) vorgesehen sind.

6. Luftkanal nach einem der vorangegangenen Ansprüche 2 und 5, **dadurch gekennzeichnet, daß** die ersten und zweiten Klettverschlußbänder (23, 24) an den Lüfterelementen (1), Verblendelementen (20) und dem Luftkanalträger (3) angeordnet und/oder in diese eingearbeitet sind.

7. Luftkanal nach einem der Ansprüche 1 bis 6, **dadurch gekennzeichnet, daß** im Kontaktbereich zwischen Unterseite (9) des Luftkanalträgers (3) und dem oberen Längsaußenbereich (7) der Lüfterelemente (1) und/oder der Verblendelemente (20) in Längsrichtung verlaufende Dichtstreifen (18) angeordnet sind.

8. Luftkanal nach einem oder mehreren der vorangegangenen Ansprüche 1 bis 7, **dadurch gekennzeichnet, daß** der Luftkanalträger (3) einteilig ausgebildet ist, und daß der Luftkanalträger (3) aus einem Kunststoff gefertigt ist.

9. Luftkanal nach einem oder mehreren der vorangegangenen Ansprüche 1 bis 8, **dadurch gekennzeichnet, daß** der Luftkanalträger (3) innenseitig in seinem oberen Bereich zu einer etwa horizontal verlaufenden Trennwand (22) ausgebildet ist.

10. Luftkanal nach einem oder mehreren der vorangegangenen Ansprüche 1 bis 9, **dadurch gekennzeichnet, daß** die Lüfterelemente (1) und/oder die Verblendelemente (20) an einer der Längsseiten (2, 4) des Luftkanalträgers (3) mittels Clipse (5) und an der gegenüberliegenden Längsseite (4, 2) des Luftkanalträgers (3) mittels Klettverschlußbänder (23, 24) befestigt sind.

## Claims

1. Air duct in a bus/coach, with an air duct carrier (3) of approximately U-shaped cross-section, whose lower orifice (6) limited by parallel longitudinal faces (2, 4) is covered by fan elements (1) and/or panelling elements (20), said fan elements (1) and panelling elements (20) being fastened to the air duct carrier (3) by longitudinally arranged spring clips (5) the first portion (12) of which locks into place behind protrusions (8) on the air duct carrier (3), **characterised in that** the second portion (15) of the clips (5) locks into place in grooves (10) or recesses (28) on the air duct carrier (3) for transverse reinforcement of said carrier (3) via the fan (1) elements and panelling elements (20).

2. Air duct in a bus/coach, with an air duct carrier (3) of approximately U-shaped cross-section, whose lower orifice (6) limited by parallel longitudinal faces (2, 4) is covered by fan elements (1) and/or panelling elements (20), **characterised in that** the fan elements (1) and the panelling elements (20) are fastened to the underside (9) of the air duct carrier (3) via first Velcro fastening straps (23) which are arranged on the upper longitudinal outside areas (7) of said elements (1, 20) and correspond with second Velcro fastening straps (24) which are designed as counterparts to said first straps (23) and are arranged on the underside of said air duct carrier (3).

3. Air duct according to Claim 1, **characterised in that** the first portions (12) and second portions (15) of the clips (5) correspond with one another and are in counteracting motion relative to one another and that the first portions (12) and/or the second portions (15) are designed as separate parts or as integral parts of the fan element (1) and/or the panelling elements (20).

4. Air duct according to one of the Claims 1 and 3, **characterised in that** the protrusions (8) are provided on the inside and the grooves (10) or recesses (28) on the outside of the longitudinal sides (2, 4) or that the protrusions (8) are provided on the outside and the grooves (10) or recesses (28) on the inside of said longitudinal sides (2, 4).

5. Air duct according to Claim 2, **characterised in that** additional webs (25) for transverse reinforcement of the air duct carrier (3) are provided, which webs are arranged so as to protrude from the fan elements (1) and/or the panelling elements (20) and are supported on the vertical flanks (26) of the longitudinal sides (2, 4) of the air duct carrier (3).

6. Air duct according to one of the foregoing Claims 2 and 5, **characterised in that** the first and the second Velcro fastening straps (23, 24) are arranged on and/or made an integral part of the fan elements (1), the panelling elements (20) and the air duct carrier (3).

7. Air duct according to one of the Claims 1 to 6, **characterised in that** in the contact area between the underside (9) of the air duct carrier (3) and the upper longitudinal outside area (7) on the fan elements (1) and/or the panelling elements (20) sealing strips (18) are arranged in longitudinal direction.

8. Air duct according to one or several of the foregoing Claims 1 to 7, **characterised in that** the air duct carrier (3) is designed as a single piece and is made of synthetic material.

9. Air duct according to one or several of the foregoing Claims 1 to 8, **characterised in that** on the inside the upper part of the air duct carrier (3) is designed as an approximately horizontal partition wall (22).

10. Air duct according to one or several of the foregoing Claims 1 to 9, **characterised in that** the fan elements (1) and/or the panelling elements (20) are fastened to one of the longitudinal sides (2, 4) of the air duct carrier (3) by means of clips (5) and to the opposite longitudinal side (4, 2) of the air duct carrier (3) by means of Velcro fastening straps (23, 24).

## Revendications

1. Conduit d'air pour un autobus comportant un support de conduit d'air (3) à section sensiblement en forme de U, dont l'ouverture inférieure (6) délimitée par des grands côtés (2, 4) parallèles est couverte par des éléments de ventilation (1) et/ou des caches (20), les éléments de ventilation (1) et les caches (20) étant fixés au support de conduit d'air (3) par des pinces élastiques (5) prévues sur les grands côtés, et les pinces (5) ayant un premier segment (12) pénétrant en s'accrochant dans des parties en contre-dépouille (8) du support de conduit d'air (3),
**caractérisé en ce que**
les pinces (5) pénètrent avec un second segment (15) dans des rainures (10) ou cavités (28) du support de conduit d'air (3) pour rigidifier celui-ci transversalement par les éléments de ventilation (1) et les caches (20).

2. Conduit d'air pour un autobus comportant un support de conduit d'air (3) à section sensiblement en forme de U, dont l'ouverture inférieure (6) délimitée par des grands côtés parallèles (2, 4) est couverte par des éléments de ventilation (2) et/ou des caches (20),
**caractérisé en ce que**
les éléments de ventilation (1) et les caches (20) sont fixés contre la face inférieure (9) du support de conduit d'air (3) par des premières bandes à griffes d'accrochage (23) prévues au niveau de leurs zones extérieures longitudinales supérieures (7) à des secondes bandes à griffes d'accrochage (24), correspondantes, réalisées comme des pièces complémentaires et installées sur la face inférieure du support de conduit d'air (3).

3. Conduit d'air selon la revendication 1,
**caractérisé en ce que**
les premiers segments (12) correspondants et les seconds segments (15) des pinces (5) sont l'un par rapport à l'autre en traction opposée, et
les premiers segments (12) et/ou les seconds segments (15) sont réalisés comme pièces distinctes ou comme parties de l'élément de ventilation (1) et/ou du cache (20).

4. Conduit d'air selon l'une des revendications 1 et 3,
**caractérisé en ce que**
les grands côtés (2, 4) comportent sur la face intérieure des contre-dépouilles (8) et sur le côté extérieur des rainures (10) ou des cavités (28), ou
les contre-dépouilles (8) sont réalisées dans le côté extérieur et les rainures (10) ou les cavités (28) dans le côté intérieur des grands côtés (2, 4).

5. Conduit d'air selon la revendication 2,
**caractérisé par**
des entretoises (25) prévues en plus en saillie par rapport aux éléments de ventilation (1) et/ou au cache (20) et s'appuyant contre les flancs verticaux (26) des grands côtés (2, 4) du support de conduit d'air (3), pour rigidifier transversalement le support de conduit d'air (3).

6. Conduit d'air selon l'une des revendications 2 et 5,
**caractérisé en ce que**
les premières et secondes bandes à griffes d'accrochage (23, 24) sont prévues sur les éléments de ventilation (1), les caches (20) et le support de conduit d'air (3) et/ou y sont intégrés.

7. Conduit d'air selon l'une quelconque des revendications 1 à 6,
**caractérisé par**
des joints d'étanchéité (18) prévus dans la zone de contact entre la face inférieure (9) du support de conduit d'air (3) et la zone extérieure longitudinale supérieure (7) des éléments de ventilation (1) et/ou des caches (20), ces joints étant dirigés dans la direction longitudinale.

8. Conduit d'air selon l'une ou plusieurs des revendications 1 à 7,
**caractérisé en ce que**
le support à conduit d'air (3) est réalisé en une seule pièce et ce support (3) est fabriqué en matière plastique.

9. Conduit d'air selon l'une ou plusieurs des revendications 1 à 8,
**caractérisé en ce que**
le support de conduit d'air (3) comporte intérieurement, dans sa zone supérieure, une cloison (22) sensiblement horizontale.

10. Conduit d'air selon l'une ou plusieurs des revendications 1 à 9,
**caractérisé en ce que**
les éléments de ventilation (1) et/ou les caches (20) sont fixés à l'un des grands côtés (2, 4) du support à conduit d'air (3) à l'aide de pinces (5), et à l'autre grand côté (4, 2) opposé du support de conduit d'air (3) par des bandes à griffes d'accrochage (23, 24).
